(19)

**Europäisches Patentamt**

**European Patent Office**

**Office européen des brevets**

(11) **EP 3 227 156 B1**

(12) **EUROPÄISCHE PATENTSCHRIFT**

(45) Veröffentlichungstag und Bekanntmachung des Hinweises auf die Patenterteilung:
**19.01.2022 Patentblatt 2022/03**

(21) Anmeldenummer: **15791528.1**

(22) Anmeldetag: **21.10.2015**

(51) Internationale Patentklassifikation (IPC):
***B60W 50/00*** *(2006.01)*

(52) Gemeinsame Patentklassifikation (CPC):
**B60W 50/00;** B60W 2050/0094

(86) Internationale Anmeldenummer:
**PCT/EP2015/074350**

(87) Internationale Veröffentlichungsnummer:
**WO 2016/087117 (09.06.2016 Gazette 2016/23)**

(54) **FAHRERASSISTENZSTEUERGERÄT, KRAFTFAHRZEUG, VERFAHREN ZUM BETREIBEN EINES FAHRERASSISTENZSTEUERGERÄTS EINES KRAFTFAHRZEUGS**

DRIVER ASSISTANCE CONTROL UNIT, MOTOR VEHICLE, METHOD FOR OPERATING A DRIVER ASSISTANCE CONTROL UNIT OF A MOTOR VEHICLE

DISPOSITIF D'AIDE À LA CONDUITE, VÉHICULE AUTOMOBILE, PROCÉDÉ DE FONCTIONNEMENT D'UN DISPOSITIF D'AIDE À LA CONDUITE D'UN VÉHICULE AUTOMOBILE

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **02.12.2014 DE 102014224665**

(43) Veröffentlichungstag der Anmeldung:
**11.10.2017 Patentblatt 2017/41**

(73) Patentinhaber: **Robert Bosch GmbH 70442 Stuttgart (DE)**

(72) Erfinder:
• **ROHDE, Jan**
  **70192 Stuttgart (DE)**
• **HOFFMANN, Stefan**
  **74321 Bietigheim (DE)**
• **MICHALKE, Thomas**
  **71263 Weil Der Stadt (DE)**

(56) Entgegenhaltungen:
WO-A1-2011/141279       WO-A1-2013/068176
DE-A1-102007 039 038    DE-A1-102007 046 731
DE-A1-102012 218 361

**Beschreibung**

Die Erfindung betrifft ein Fahrerassistenzsteuergerät für ein Fahrzeug, insbesondere Kraftfahrzeug, mit wenigstens einem Funktionsmodul zur Durchführung unterschiedlicher Sicherheitsfunktionen des Fahrzeugs, mit einem Auswertemodul zum Auswerten von Sensordaten des Fahrzeugs, mit einem Entscheidungsmodul zum Bestimmen wenigstens einer durchzuführenden Sicherheitsfunktion in Abhängigkeit von der Auswertung der Sensordaten und mit einem Ansteuermodul zum Ansteuern einer Aktorik in Abhängigkeit von der bestimmten Sicherheitsfunktion.

Ferner betrifft die Erfindung ein Kraftfahrzeug mit einem derartigen Fahrerassistenzsteuergerät sowie ein Verfahren zum Berteiben eines derartigen Fahrerassistenzsteuergeräts eines Fahrzeugs, insbesondere Kraftfahrzeugs.

Stand der Technik

Fahrerassistenzsteuergeräte sowie Verfahren zum Betreiben dieser sind aus dem Stand der Technik bereits bekannt. Üblicherweise folgen Fahrerassistenzsysteme oder Fahrerassistenzsteuergeräte unabhängig von ihrer funktionalen Ausrichtung einer gemeinsamen, insbesondere sequenziellen Grundstruktur. In einer Sensorebene werden Rohdaten durch eine Sensorik, wie beispielsweise Video- oder Radardaten, einer im Fahrzeug verbauten Umfeldsensorik erzeugt. Durch ein Auswertemodul oder eine

Auswerteeinrichtung werden diese Rohdaten erfasst und ausgewertet beziehungsweise kombiniert, um eine Auswertung durchzuführen. Die ausgewerteten Sensordaten werden dann beispielsweise durch ein Entscheidungsmodul dahingehend genutzt, dass entschieden wird, ob eine Sicherheitsfunktion durch das Fahrerassistenzsteuergerät, wie beispielsweise eine automatische Bremsbetätigung oder dergleichen durchgeführt werden soll. In einer Funktionsebene wird beispielsweise durch ein Ansteuermodul in Abhängigkeit von einer bestimmten Sicherheitsfunktion eine Aktorik angesteuert, wobei beispielsweise auch die Art des Systemeingriffs berechnet wird, wie beispielsweise die Stärke eines Bremseingriffs.

Die bekannten Lösungen haben den Nachteil, dass die Hardware beziehungsweise das Fahrerassistenzsteuergerät dazu in der Lage sein muss, dass alle Sicherheitsfunktionen parallel durchgeführt werden. Dadurch werden hohe Anforderungen an die Ressourcen und Rechengeschwindigkeit des Fahrerassistenzsteuergeräts gestellt.

Aus der europäischen Patentschrift EP 1 356 979 B1 ist ein Fahrerassistenzsystem bekannt, bei welchem dem Fahrer des Fahrzeugs vordefinierte Gruppen von Teilfunktionen angezeigt werden, aus denen dieser eine durch Betätigen eines Eingabeelements auswählen kann. Der Fahrer kann somit beispielsweise die Anzahl der durchzuführenden Funktionen eines Fahrerassistenzsteuergeräts durch Auswahl einer vorbestimmten Funktionsgruppe begrenzen.

Aus der WO 2013/068176 A1 ist eine Vorrichtung und ein Verfahren zum Betreiben eines Fahrzeugs bekannt, welche eine einfachere Vernetzung von Umfeldsensoren von Fahrerassistenzsystemen mit Steuergeräten von Stellsystemen des Fahrzeugs ermöglichen.

Die DE 102012 218361 A1 zeigt ein Verfahren zum Betrieb eines Kraftfahrzeugs, wobei eine Kollisionsgefahr des Kraftfahrzeugs mit einem Objekt anhand einer Gefahrenbewertung ermittelt wird.

In der WO 2011/141279 A1 ist ein Verfahren zur Anpassung eines Fahrerassistenzsystems an eine aktuelle Fahrsituation offenbart, wobei mindestens ein Parameter des Fahrerassistenzsystems in Abhängigkeit der Information aus einer Umfeldsensorik eingestellt wird.

Aus der DE 10 2007 039038 A1 ist ein Verfahren zum Ansteuern von Sicherheitsmitteln in einem Kraftfahrzeug in einer Fahrsituation offenbart, in der es zu einer Kollision zwischen dem Kraftfahrzeug und einem Umfeldobjekt kommen kann.

Offenbarung der Erfindung

Das erfindungsgemäße Fahrerassistenzsteuergerät mit den Merkmalen des Anspruchs 1 hat den Vorteil, dass die Anforderungen an die Hardware des Fahrerassistenzsteuergeräts verringert werden, indem automatisch eine Beschränkung der durchzuführenden Funktionen erfolgt, indem Sicherheitsfunktionen, die aktuell nicht benötigt werden, keine Ressourcen oder Rechenleistung verbrauchen. Durch die Erfindung wird erreicht, dass auch auf einer kostengünstigen Hardware eine Vielzahl von Sicherheitsfunktionen durchgeführt werden können, wobei einerseits eine gleichzeitige Ausführung aller Funktionen nicht möglich sein muss, und andererseits dennoch aus Sicht des Fahrers/Benutzers alle Sicherheitsfunktionen uneingeschränkt zur Verfügung stehen. Erfindungsgemäß wir dies dadurch erreicht, dass mehrere Funktionsmodule zur Durchführung der unterschiedlichen Sicherheitsfunktionen vorgesehen sind, wobei jedes Funktionsmodul jeweils ein Auswertemodul, ein Entscheidungsmodul und ein Ansteuermodul aufweist, und dass ein Steuermodul vorgesehen ist, dass in Abhängigkeit von den Sensordaten bestimmt, welches der Funktionsmodule betrieben wird. Im Unterschied zum Stand der Technik werden somit die Sicherheitsfunktionen auf unterschiedliche Funktionsmodule verteilt. Die Funktionsmodule werden insbesondere softwareseitig definiert, jedoch ist auch eine hardwareseitige Aufteilung denkbar. Durch das Steuermodul wird bestimmt, welches der Funktionsmodule betrieben wird. Damit ist es möglich, die Hardware derart zu dimensionieren, dass nur eine vorbestimmte Anzahl von Funktionsmodulen beziehungsweise Sicherheitsfunktionen betreibbar beziehungsweise durchführbar ist, die kleiner ist als die insgesamt zur Verfügung stehende Anzahl von Sicherheitsfunktionen. Durch das Steuermodul wird jeweils situationsabhängig, also in Abhängigkeit von den erfassten Sensordaten, die jeweils durchzuführende Sicherheitsfunktion bestimmt. Es erfolgt somit eine Vorauswahl der zu betreibenden beziehungsweise durchzuführenden Funktionsmodule/Sicherheitsfunktionen, bevor die Berechnung von Ansteuerparametern durch das jeweilige Ansteuermodul erfolgt.

Gemäß einer vorteilhaften Weiterbildung der Erfindung ist vorgesehen, dass das Steuermodul einen Klassifikator aufweist, der in Abhängigkeit der Sensordaten eine aktuelle Verkehrssituation ermittelt und in Abhängigkeit der ermittelten Verkehrssituation auf einen Verkehrssituationstyp erkennt. Der Klassifikator wertet somit die Sensordaten aus, um einen Verkehrssituationstypen zu bestimmen, in Abhängigkeit dessen das Steuermodul das zu betreibende Funktionsmodul auswählt.

Bevorzugt ist vorgesehen, dass der Klassifikator zur Bestimmung des Verkehrssituationstypen die aktuelle Verkehrssituation mit vordefinierten Verkehrssituationen, die unterschiedlichen Unfalltypen entsprechen, vergleicht. Dadurch wird automatisch ein in der jeweiligen Verkehrssituation wahrscheinlicher Unfalltyp bei der Bestimmung der relevanten Sicherheitsfunktionen berücksichtig. Dadurch wird das Fahrerassistenzsteuergerät darauf optimiert, die Sicherheit für die Insassen des Fahrzeugs zu maximieren.

Weiterhin ist bevorzugt vorgesehen, dass das Steuermodul einen Priorisierer aufweist, der in Abhängigkeit von dem durch den Klassifikator bestimmten Verkehrssituationstyp die Sicherheitsfunktionen in Abhängigkeit ihrer Relevanz für den bestimmten Verkehrssituationstyp priorisiert. Durch diese Priorisierung erfolgt die zuvor beschriebene Auswahl, insbesondere für die jeweilige Unfallsituation beziehungsweise den jeweiligen Unfalltyp. Durch die Priorisierung wird bestimmt, welche der zur Verfügung stehenden Sicherheitsfunktionen durchgeführt wird. Insbesondere wird eine Reihenfolge vorgegeben, in welcher die unterschiedlichen Sicherheitsfunktionen abgearbeitet werden sollen beziehungsweise in welcher die unterschiedlichen Funktionsmodule betrieben werden sollen, um eine aktuelle Verkehrssituation zu entschärfen oder zumindest für die Insassen des Fahrzeugs die größtmögliche Sicherheit zu gewährleisten.

Weiterhin ist bevorzugt vorgesehen, dass das Steuermodul einen Funktionsmodulentscheider aufweist, der in Abhängigkeit von der priorisierten Sicherheitsfunktion das zu betreibende Funktionsmodul bestimmt. Der Funktionsmodulentscheider ist somit letztendlich für die Auswahl des relevanten Funktionsmoduls verantwortlich und trifft seine Entscheidung in Abhängigkeit von der Priorisierung der Sicherheitsfunktion, die in Abhängigkeit von den Sensordaten abhängigen Verkehrssituationstyp bestimmt wird.

Das erfindungsgemäße Kraftfahrzeug mit den Merkmalen des Anspruchs 6 zeichnet sich durch das erfindungsgemäße Fahrerassistenzsteuergerät aus. Es ergeben sich hierdurch die bereits genannten Vorteile für das Kraftfahrzeug. Das Fahrerassistenzsteuergerät ist zweckmäßigerweise mit Sensoren beziehungsweise einer Umfeldsensorik des Kraftfahrzeugs signaltechnisch verbunden, um die Sensordaten wie zuvor beschrieben auszuwerten.

Das erfindungsgemäße Verfahren mit den Merkmalen des Anspruchs 7 zeichnet sich dadurch aus, dass mehrere Funktionsmodule zur Durchführung unterschiedlicher Sicherheitsfunktionen betrieben werden, wobei in Abhängigkeit von den Sensordaten bestimmt wird, welches der Funktionsmodule betrieben wird. Es ergeben sich hierdurch die bereits genannten Vorteile. Weitere Merkmale und Vorteile ergeben sich aus dem zuvor beschriebenen sowie aus den Ansprüchen.

Im Folgenden soll die Erfindung anhand der Zeichnung näher erläutert werden. Dazu zeigen

Figur 1    ein Fahrerassistenzsystem in einer vereinfachten Darstellung, und

Figur 2    ein Steuermodul des Fahrerassistenzsystems in einer vereinfachten Darstellung.

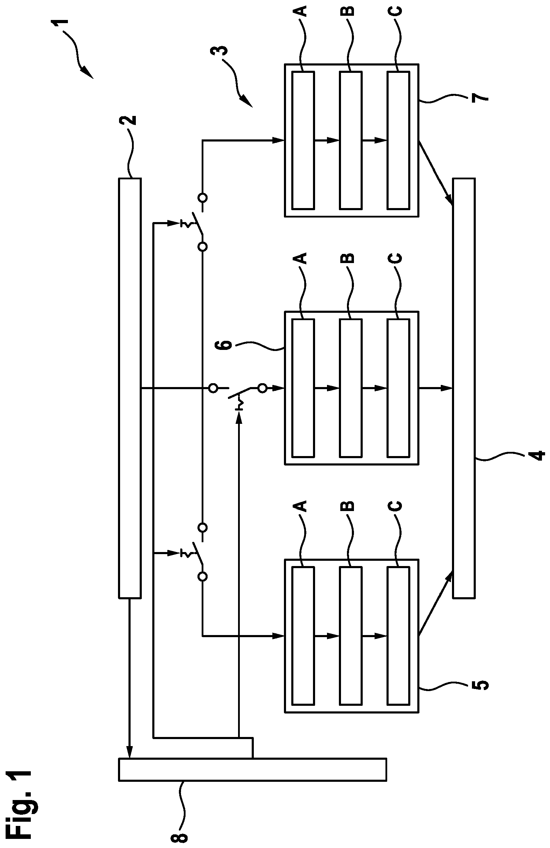

Figur 1 zeigt in einer vereinfachten Darstellung ein Fahrerassistenzsystem 1, das eine Umfeldsensorik 2, ein Fahrerassistenzsteuergerät 3 sowie eine Aktorik 4 aufweist. Die Sensorik 2 ist insbesondre als Umfeldsensorik ausgebildet und weist beispielsweise Video-, Kamerasensoren, Radarsensoren oder Abstandserfassungssensoren, wie beispielsweise Ultraschallsensoren auf, um die nähere Umgebung des Kraftfahrzeugs zu überwachen und zu erfassen. Hier kann beispielsweise eine in Kraftfahrzeugen heute bereits übliche Umfeldsensorik genutzt werden. Die Aktorik 4 greift bei Bedarf in das Fahrgeschehen ein, indem sie beispielsweise einen Lenkwinkel oder einen Bremsdruck oder dergleichen verändert. Die Aktorik 4 weist dazu insbesondere mehrere individuell betätigbare Aktuatoren auf. Dabei kann es sich um im Kraftfahrzeug bereits vorhandene Aktuatoren oder auch um zusätzlich hinzugefügte Aktuatoren handeln. Zwischen der Sensorik 2 und der Aktorik 4 ist das Steuergerät 3 zwischengeschaltet, das in Abhängigkeit von durch die Sensorik erfassten Sensordaten die Aktorik 4 ansteuert.

Das Fahrerassistenzsteuergerät 3 weist dazu mehrere, vorliegend 3, Funktionsmodule 5, 6, 7 auf, die zur Durchführung unterschiedlicher Sicherheitsfunktionen für das Kraftfahrzeug ausgebildet sind. Jedes Funktionsmodul weist ein Auswertemodul A, ein Entscheidungsmodul B sowie ein Ansteuermodul C auf. Das Auswertemodul A wertet jeweils die empfangenen Sensordaten aus, um die aktuelle Fahrsituation oder die aktuelle Verkehrssituation zu ermitteln.

Das Entscheidungsmodul B entscheidet, ob aufgrund der ausgewerteten Sensordaten eine Sicherheitsfunktion des jeweiligen Funktionsmoduls 5, 6 oder 7 durchgeführt werden soll oder nicht. Entscheidet das Entscheidungsmodul B, dass die Funktion durchgeführt werden soll, gibt es diese Information an das Ansteuermodul C weiter, welches entsprechende Parameter generiert, um die Aktorik 4 des Kraftfahrzeugs zum Durchführen der gewählten Sicherheitsfunktion zu betreiben.

Weiterhin weist das Fahrerassistenzsteuergerät 3 ein Steuermodul 8 auf, welchem die Sensordaten der Sensorik 2 zunächst zugeführt werden. Das Steuermodul 8 bestimmt, welches der Funktionsmodule 5, 6, 7 betrieben, beziehungsweise welchem der Funktionsmodule 5, 6, 7 die Sensordaten zur weiteren Verarbeitung zugeführt werden. Dies ist durch symbolische Schaltelemente in Figur 1 angedeutet.

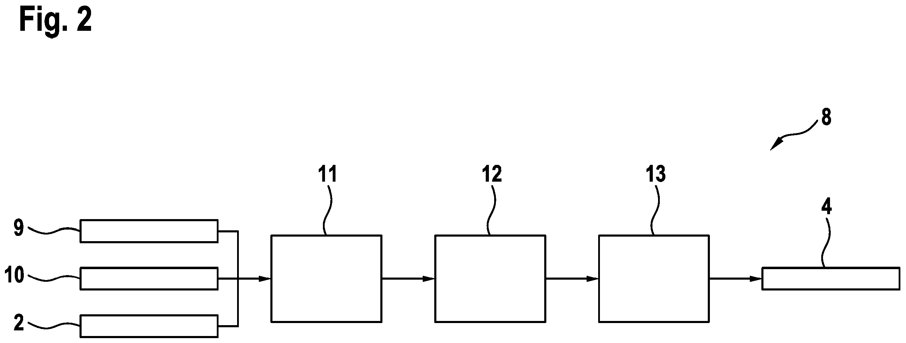

Figur 2 zeigt das Steuermodul 8 in einer vereinfachten Detailansicht. Das Steuermodul ist mit der Sensorik 2, einem Navigationssystem 9 des Kraftfahrzeugs sowie mit einem Datenbus-System 10 des Kraftfahrzeugs verbunden. Diese Daten werden einem Klassifikator 11 zugeführt, der die Aufgabe hat, in festen Zeitabständen die aktuell vorliegende Verkehrssituation mit unterschiedlichen vordefinierten Verkehrssituationen zu vergleichen und den Grad der Übereinstimmung zu bewerten, um auf einen vorbestimmten Verkehrssituationstyp zu erkennen. Dabei ist es denkbar, dass der Klassifikator 11 für jede vordefinierte Verkehrssituation eine Zahl zwischen 0 und 1, die den Grad der Übereinstimmung mit der aktuell vorliegenden Verkehrssituation abbildet, ermittelt. Die genannten vordefinierten Verkehrssituationen werden insbesondere aus häufig vorkommenden Unfalltypen der Unfallforschung abgeleitet. Die Unfalltypen dienen dem Zweck, in Bezug auf Unfallhergang und Umfeld verwandte Unfälle in Klassen zu untergliedern. Die Klassen ermöglichen es, Aussagen zum adressierten Wirkfeld einer Fahrerassistenzfunktion beziehungsweise Sicherheitsfunktion abzuleiten.

Auf den Klassifikator 11 folgt ein Priorisierer 12, der die Klassifikationsergebnisse des Klassifikators 11 kombiniert und gewichtet, um den im aktuellen Szenario beziehungsweise in der aktuellen Verkehrssituation erwarteten Nutzen der einzelnen Fahrerassistenzfunktionen beziehungsweise der einzelnen Funktionsmodule 5, 6, 7 im Funktionsbündel zu bestimmen. Die Gewichtung entspricht vorzugsweise den relativen Häufigkeiten von Unfällen mit Personenschaden in der vorliegenden Verkehrssituation. Weiterhin können Landes- beziehungsweise Weltregionen bezogene Besonderheiten im Unfallgeschehen über die Gewichtung abgebildet werden. So ist es denkbar, eine Tabelle mit Unfallhäufigkeiten zu verwenden, die in den Zeilen zwischen unterschiedlichen Verkehrssituationen und in den Spalten zwischen geografischen Regionen unterscheidet. Die nachfolgende Formel bildet diesen Zusammenhang beispielhaft ab:

$$E_i = P(ADAS_i \mid CAN, Video) = \sum_j P(Scene_j \mid CAN, Video) * w_{ij} * cw_{ij}$$

Dabei sind $cw_{ij}$ die Länderspezifischen Gewichte für die relevanten Szenen j und die ADAS Funktionalität i. die Gewichte $w_{ij}$ beschreiben den landesunabhängigen szenenspezifischen Einfluss für die Aktivierung der ADAS Funktionalität i. Der Klassifikator 11 gibt hierbei die Szenenwahrscheinlichkeiten P(Scene) an.

Im Ergebnis liefert der Priorisierer 12 somit eine Prioritätenliste für die Funktionsmodule 5, 6, 7, das heißt alle Funktionen beziehungsweise Funktionsmodule 5, 6, 7 werden gemäß ihrem aktuell zu erwartenden Nutzen, also ihrer Relevanz für die aktuelle Verkehrssituation sortiert.

Auf dem Priorisierer 12 folgt ein Funktionsmodulentscheider 13. Dieser bestimmt, welches der Funktionsmodule 5, 6, 7 betrieben, beziehungsweise welche Sicherheitsfunktion durchgeführt wird. Die Bestimmung beziehungsweise Umschaltung zwischen den Sicherheitsfunktionen erfolgt in Abhängigkeit von der durch den Priorisierer 12 festgelegten Prioritätsverteilung unter den Fahrerassistenzfunktionen beziehungsweise Sicherheitsfunktionen. Zweckmäßigerweise werden dazu Ausführbarkeitsgarantien und zulässige Rechenzeiten an die einzelnen Funktionen vergeben. Auf diese Weise können folgende zentrale Eigenschaften und Vorteile gegenüber bekannten Systemen erreicht werden:
Dem Nutzer wird in jeder Fahrsituation die Fahrerassistenzfunktion beziehungsweise Sicherheitsfunktion mit der höchsten situationsspezifischen Relevanz zur Verfügung gestellt. Dies geschieht über die Zuweisung der Ausführbarkeitsgarantie an die Funktion mit der höchsten Priorität. Dem Benutzer werden außerdem zusätzliche Fahrerassistenzfunktionen/Sicherheitsfunktionen aus dem Funktionsbündel zur Verfügung gestellt. Der Umfang der zusätzlichen Funktionen richtet sich nach der Leistungsfähigkeit der Hardware des Fahrerassistenzsteuergeräts und dem Ressourcenbedarf der höchst priorisierten Funktion. Prinzipiell kann weiteren Funktionen eine Ausführbarkeitsgarantie erteilt oder die verfügbare Rechenzeit für einzelne Funktionen verkürzt werden. Auf diese Weise werden der Systemnutzen für den Nutzer und die Ausnutzung der Leistungsfähigkeit der Hardware des Fahrerassistenzsteuergeräts 3 beziehungsweise des Fahrerassistenzsteuersystems 1 optimiert. Der Ressourcenbedarf des Funktionsmodulentscheiders 13 zur Laufzeit ist vernachlässigbar gering. Die Zuweisung der Ausführbarkeitsgarantien und der zulässigen Rechenzeiten für jede mögliche Prioritätsverteilung wird bevorzugt aus einer Look-up-Tabelle bezogen, die zuvor mitberechnet und in einem nicht flüchtigen Speicher hinterlegt wird. Die Ergebnisse werden in einer geeigneten Datei gespeichert und dem Funktionsmodulentscheider 13 zur Laufzeit zur Verfügung gestellt.

Eine Rechenzeitverkürzung kann dadurch erreicht werden, dass für alle Funktionen eine Basiskonfiguration vorgehalten wird, die zu einem begrenzten Funktionsumfang (Basisfunktionalität) führt. In der Basiskonfiguration wird eine Funktion beziehungsweise eine Sicherheitsfunktion so parametrisiert, dass eine geringe Rechenzeit verbunden mit einem verringerten Funktionsnutzen vorliegt. So kann beispielsweise für eine Fußgängerschutzfunktion der aktive Erfassungsbereich der Umfeldsensorik auf einen im Vergleich zum insgesamt möglichen Erfassungsbereich verkleinerten Bereich verringert und auf eine bestimmte Richtung fokussiert werden, bei welcher davon ausgegangen wird, dass hier beispielsweise eine Kollision mit Fußgängern wahrscheinlicher ist. Der Funktionsnutzen ist dann zwar eingeschränkt, da in dem übrigen Erfassungsbereich Fußgänger nicht erkannt werden können. Die Funktionen in voller Ausprägung auszuführen ist jedoch in einzelnen Fällen eventuell nicht möglich, da bereits eine andere höhere priorisierte Funktion/Sicherheitsfunktion die Rechenzeit belegt.

Der Funktionsmodulentscheider 13 besteht vorzugsweise aus zwei Komponenten. Über eine Task GUI-Komponente kann ein Entwickler Funktionen/Sicherheitsfunktionen definieren. Diese Funktionen bestehen jeweils aus mehreren Unterfunktionen, den sogenannten Tasks, welche dem Auswertemodul, dem Entscheidungsmodul und dem Ansteuermodul zugeordnet werden können. Für jede mögliche Prioritätszuweisung für die Funktionen führt die Task GUI eine geeignete Zuweisung von Ausführbarkeitsgarantien und Rechenzeiten durch und speichert diese in einer Datei. Die Zuweisung der Ausführbarkeitsgarantien basiert vorzugsweise auf einem speziellen, etablierten Prozessplanungsrhythmus, wie er unter anderen in Yung/Saksena (Yun Wang; Saksena, M., "Scheduling fixed-priority tasks with preemption threshold," Real-Time Computing Systems and Applications, 1999) beschrieben ist. Die Task GUI wird vorzugsweise auf einem externen Rechner ausgeführt. Anschließend wird die erzeugte Datei auf die günstigere Rechnerhardware des Fahrerassistenzsteuergeräts 3 geladen. Die zweite Komponente des Funktionsmodulentscheiders 13 wird auf der Rechnerhardware des Fahrerassistenzsteuergeräts 3 ausgeführt. In Abhängigkeit von dem Ausgang des Priorisieres 12 liest diese die Parameter aus der Datei aus und führt dem Dateiinhalt entsprechend die Funktionsumschaltung durch.

In einer Weiterbildung ist es denkbar, mit der Umschaltung der Funktion/Sicherheitsfunktion auch zwischen Sensoren und Sensordatenverarbeitung umzuschalten, sodass für das jeweilige Funktionsmodul 5, 6, 7 relevante Sensoren genutzt und die anderen deaktiviert werden, sodass Energie und weitere Ressourcen gespart werden können. So ist es beispielsweise möglich zum Durchführen der Sicherheitsfunktion Fußgängerschutz eine Frontkamera zu aktivieren und Seitenkameras zu deaktivieren. Auch ist es denkbar für die Sicherheitsfunktion "Kreuzungsassistenz" Seitenkameras zu aktivieren und die Frontkamera zu deaktivieren.

## Patentansprüche

1. Fahrerassistenzsteuergerät (3) für ein Fahrzeug, insbesondere Kraftfahrzeug, mit wenigstens einem Funktionsmodul (5, 6, 7) zu Durchführung unterschiedlicher Sicherheitsfunktionen, mit einem Auswertemodul (A) zum Auswerten von Sensordaten des Fahrzeugs, mit einem Entscheidungsmodul (B) zur Bestimmung wenigstens einer durchzuführenden Sicherheitsfunktion in Abhängigkeit von der Auswertung der Sensordaten, und mit einem Ansteuermodul (C) zum Ansteuern einer Aktorik (4) des Fahrzeugs in Abhängigkeit von der bestimmten Sicherheitsfunktion, **dadurch gekennzeichnet, dass** mehrere Funktionsmodule (5, 6, 7) zur Durchführung der unterschiedlichen Sicherheitsfunktionen vorgesehen sind, wobei jedes Funktionsmodul (5, 6, 7) jeweils ein Auswertemodul (A), ein Entscheidungsmodul (B) und ein Ansteuermodul (C) aufweist, und dass ein Steuermodul (8) vorgesehen ist, das in Abhängigkeit von den Sensordaten bestimmt, welches der Funktionsmodule (5, 6, 7) betrieben wird.

2. Fahrerassistenzsteuergerät nach Anspruch 1, **dadurch gekennzeichnet, dass** das Steuermodul (8) einen Klassifikator (11) aufweist, der in Abhängigkeit der Sensordaten eine aktuelle Verkehrssituation ermittelt und in Abhängigkeit davon auf einen Verkehrssituationstypen erkennt.

3. Fahrerassistenzsteuergerät nach Anspruch 2,
**dadurch gekennzeichnet, dass** der Klassifikator (11) zur Bestimmung des Verkehrssituationstypen die aktuelle Verkehrssituation mit vordefinierten Verkehrssituationen, die unterschiedlichen Unfalltypen entsprechen, vergleicht.

4. Fahrerassistenzsteuergerät nach einem der Ansprüche 2 oder 3,
**dadurch gekennzeichnet, dass** das Steuermodul (8) einen Priorisierer (12) aufweist, der in Abhängigkeit von dem bestimmten Verkehrssituationstyp die Sicherheitsfunktionen in Abhängigkeit ihrer Relevanz für den Verkehrssituationstyp priorisiert.

5. Fahrerassistenzsteuergerät nach Anspruch 4,
**dadurch gekennzeichnet, dass** das Steuermodul (8) einen Funktionsmodulentscheider (13) aufweist, der in Abhängigkeit von der Priorisierung der Sicherheitsfunktionen das zu betreibende Funktionsmodul (5, 6, 7) bestimmt.

6. Kraftfahrzeug mit einem Fahrerassistenzsystem (1), das eine Umfeldsensorik (2) sowie ein Fahrerassistenzsteuergerät (3) aufweist, **gekennzeichnet durch** die Ausbildung des Fahrerassistenzsteuergeräts (3) nach einem oder mehreren der vorhergehenden Ansprüche.

7. Verfahren zum Betreiben eines Fahrerassistenzsteuergeräts (3) eines Fahrzeugs, insbesondere Kraftfahrzeugs, nach einem oder mehreren der Ansprüche 1 bis 5, wobei wenigstens ein Funktionsmodul (5, 6, 7) zur Durchführung unterschiedlicher Sicherheitsfunktionen für das Fahrzeug betrieben wird, und wobei Sensordaten des Fahrzeugs ausgewertet und in Abhängigkeit von der Auswertung zumindest eine durchzuführende Sicherheitsfunktion bestimmt und durchgeführt wird, **dadurch gekennzeichnet, dass** mehrere Funktionsmodule (5, 6, 7) zur Durchführung der unterschiedlichen Sicherheitsfunktionen betrieben werden, wobei in Abhängigkeit von den Sensordaten bestimmt wird, welches der Funktionsmodule (5, 6, 7) betrieben wird.

**Claims**

1. Driver assistance controller (3) for a vehicle, in particular motor vehicle, having at least one function module (5, 6, 7) for performing different safety functions, having an evaluation module (A) for evaluating sensor data of the vehicle, having a decision module (B) for determining at least one safety function to be performed on the basis of the evaluation of the sensor data, and having an actuation module (C) for actuating an actuator system (4) of the vehicle on the basis of the determined safety function, **characterized in that** provision is made for a plurality of function modules (5, 6, 7) for performing the different safety functions, wherein each function module (5, 6, 7) in each case has an evaluation module (A), a decision module (B) and an actuation module (C), and **in that** provision is made for a control module (8) that determines which of the function modules (5, 6, 7) is operated on the basis of the sensor data.

2. Driver assistance controller according to Claim 1, **characterized in that** the control module (8) has a classifier (11) that ascertains a current traffic situation on the basis of the sensor data and identifies a traffic situation type on the basis thereof.

3. Driver assistance controller according to Claim 2, **characterized in that** the classifier (11), in order to determine the traffic situation type, compares the current traffic situation with predefined traffic situations corresponding to different accident types.

4. Driver assistance controller according to either of Claims 2 and 3, **characterized in that** the control module (8) has a prioritizer (12) that, on the basis of the determined traffic situation type, prioritizes the safety functions on the basis of their relevance to the traffic situation type.

5. Driver assistance controller according to Claim 4, **characterized in that** the control module (8) has a function module decider (13) that determines the function module (5, 6, 7) to be operated on the basis of the prioritization of the safety functions.

6. Motor vehicle having a driver assistance system (1) that has a surroundings sensor system (2) and a driver assistance controller (3), **characterized in that** the driver assistance controller (3) is designed in accordance with one or more of the preceding claims.

7. Method for operating a driver assistance controller (3) of a vehicle, in particular motor vehicle, according to one or more of Claims 1 to 5, wherein at least one function module (5, 6, 7) for performing different safety functions for the vehicle is operated, and wherein sensor data of the vehicle are evaluated and at least one safety function to be performed is determined and performed on the basis of the evaluation, **characterized in that** a plurality of function modules (5, 6, 7) for performing the different safety functions are operated, wherein which of the function modules (5, 6, 7) is operated is determined on the basis of the sensor data.

**Revendications**

1. Appareil de commande d'assistance au conducteur (3) pour un véhicule, en particulier un véhicule automobile, comprenant au moins un module fonctionnel (5, 6, 7) destiné à effectuer différentes fonctions de sécurité, un module d'évaluation (A) destiné à évaluer des données de capteur du véhicule, un module de décision (B) destiné à déterminer au moins une fonction de sécurité à effectuer en fonction de l'évaluation des données de capteur, et un module de pilotage (C) destiné à piloter un système d'actionneurs (4) du véhicule en fonction de la fonction de sécurité déterminée,
   **caractérisé en ce que** plusieurs modules fonctionnels (5, 6, 7) sont prévus pour effectuer les différentes fonctions de sécurité, chaque module fonctionnel (5, 6, 7) présentant respectivement un module d'évaluation (A), un module de décision (B) et un module de pilotage (C), et **en ce qu'**un module de commande (8) est prévu qui détermine en fonction des données de capteur lequel des modules fonctionnels (5, 6, 7) est en fonctionnement.

2. Appareil de commande d'assistance au conducteur selon la revendication 1, **caractérisé en ce que** le module de commande (8) présente un dispositif de classification (11) qui établit en fonction des données de capteur une situation de trafic actuelle et reconnaît en fonction de celle-ci un type de situation de trafic.

3. Appareil de commande d'assistance au conducteur selon la revendication 2, **caractérisé en ce que** le dispositif de classification (11) compare pour la détermination du type de situation de trafic la situation de trafic actuelle à des situations de trafic prédéfinies qui correspondent à différents types d'accident.

4. Appareil de commande d'assistance au conducteur selon l'une quelconque des revendications 2 ou 3, **caractérisé en ce que** le module de commande (8) présente un dispositif de priorisation (12) qui priorise en fonction du type de situation de trafic déterminée les fonctions de sécurité en fonction de leur pertinence pour le type de situation de trafic.

5. Appareil de commande d'assistance au conducteur selon la revendication 4, **caractérisé en ce que** le module de commande (8) présente un dispositif de décision de module fonctionnel (13) qui détermine en fonction de la priorisation des fonctions de sécurité le module fonctionnel (5, 6, 7) à faire fonctionner.

6. Véhicule automobile comprenant un système d'assistance au conducteur (1) qui présente un système de capteurs d'environnement (2) ainsi qu'un appareil de commande d'assistance au conducteur (3), **caractérisé en ce que** l'appareil de commande d'assistance au conducteur (3) est réalisé selon une ou plusieurs des revendications précédentes.

7. Procédé permettant de faire fonctionner un appareil de commande d'assistance au conducteur (3) d'un véhicule, en particulier d'un véhicule automobile, selon une ou plusieurs des revendications 1 à 5, dans lequel au moins un module fonctionnel (5, 6, 7) est en fonctionnement pour effectuer différentes fonctions de sécurité pour le véhicule, et dans lequel des données de capteur du véhicule sont évaluées, et en fonction de l'évaluation, au moins une fonction de sécurité à effectuer est déterminée et effectuée,
   **caractérisé en ce que** plusieurs modules fonctionnels (5, 6, 7) sont en fonctionnement pour effectuer les différentes fonctions de sécurité, dans lequel il est déterminé en fonction des données de capteur lequel des modules fonctionnels (5, 6, 7) est en fonctionnement.

Fig. 1

Fig. 2

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- EP 1356979 B1
- WO 2013068176 A1
- DE 102012218361 A1
- WO 2011141279 A1
- DE 102007039038 A1

**In der Beschreibung aufgeführte Nicht-Patentliteratur**

- **YUN WANG ; SAKSENA, M.** Scheduling fixed-priority tasks with preemption threshold. *Real-Time Computing Systems and Applications,* 1999